# EUROPÄISCHE PATENTSCHRIFT

(11) **EP 1 115 958 B1**
(45) Veröffentlichungstag und Bekanntmachung des Hinweises auf die Patenterteilung: **26.04.2006**
(21) Anmeldenummer: 00953070.0
(22) Anmeldetag: 19.07.2000
(51) Int. Cl.: E06B 3/02, E06B 3/66, E06B 5/16

(54) **BRANDSCHUTZTÜR ODER -FENSTER**
FIRE DOOR OR FIRE WINDOW
PORTE OU FENETRE COUPE-FEU

(30) Priorität: 21.07.1999 DE 19933410
(43) Veröffentlichungstag der Anmeldung: 18.07.2001
(73) Patentinhaber: Brandschutz Systeme GmbH, 4680 Haag am Hausruck (AT)
(72) Erfinder: DEGELSEGGER, Walter, A-4690 Schwanenstad (AT)
(74) Vertreter: Hübscher, Helmut
(86) Internationale Anmeldenummer: PCT/EP2000/006884
(87) Internationale Veröffentlichungsnummer: WO 2001/007744

(56) Entgegenhaltungen:
- EP-A- 0 228 641
- EP-A- 0 472 109
- EP-A- 1 020 605
- WO-A-98/02632
- DE-A- 3 714 629
- DE-A- 19 543 148
- DE-A- 19 733 381
- DE-C- 19 626 612
- FR-A- 2 543 608

## Beschreibung

Die Erfindung betrifft eine Brandschutztür oder -fenster gemäß dem Oberbegriff des Patentanspruches 1, die im wesentlichen aus einer Glasscheibe, welche innerhalb eines sie umgreifenden metallischen Rahmens einbettet ist, besteht, und zur Vermeidung des Übergreifens von Rauch und Feuer innerhalb eines Brandabschnittes dient.

Nach dem im Folgenden aufgezeigten Stand der Technik passen derartige Konstruktionen heute nicht mehr in die zeitgemäße Architektur. Der Weg geht heute dahin, dem Betrachter das Gefühl zu vermitteln, dass hier entmaterialisierte durchsichtige Konstruktionen verwendet werden, die mit den aus dem Stand der Technik bekannten Konstruktionen heute nicht mehr zu lösen sind.

Eine Brandschutztür ist beispielsweise der EP 0 401 555 A2 zu entnehmen, wo innerhalb eines Metallrahmens, der eine umlaufende Aufnahmenut hat, eine Glasscheibe eingesetzt ist. Dabei endet die Glasscheibe vor dem Rahmen und wird durch zusätzliche auf der Glasscheibe befestigte Metallrandstreifen, die als Ausgleichsadapter fungieren, mit dem Metallrahmen verbunden. Die Metallstreifen werden dabei mit einem üblichen Brandschutzkleber, beispielsweise auf Wasserglasbasis, verbunden.

Eine Abschlussleiste für Metalltüren zeigt die EP 0 612 910 A2, die zur Stabilitätserhöhung im unteren Bereich zwischen zwei vorstehenden Schenkeln eingedrückt wird.

Ein Rahmenprofil für Brandschutztüren ist der EP 0 444 393 A2 zu entnehmen, bei dem eine Glasscheibe von einem starken Rahmenprofil gehalten wird. Das Rahmenprofil ist als Hohlkammerprofil ausgeführt und weist in den Kammern eingeführte Brandschutzplatten aus, die die Feuerbeständigkeit einer solchen Tür garantieren.

Eine feuerwiderstandsfähige Verglasung wird in der DE 26 45 259 A1 beschrieben. Dabei werden Silikat-Glasscheiben aus vorgespanntem Glas auf der einen Seite verwendet und auf der anderen Seite eines dazwischenliegenden Luftzwischenraumes eine armierte Silikat-Glasscheibe verwendet. Der Aufbau einer solchen feuerbeständigen Verglasung wird durch einen den Rand einfassenden und diesen übergreifenden metallischen Rahmen bewerkstelligt.

Die DE 195 43 149 A1 zeigt eine Brandschutzverglasung mit mindestens zwei Scheiben, die durch ein Abstandshalteprofil beabstandet sind, so daß sich ein Zwischenraum ergibt, der mit einem feuerwiderstandsfähigen Brandschutzmedium gefüllt ist. Das die Glasscheiben beabstandete Profil reicht im Wesentlichen bis an den Rand des Türblattes bzw. Fensterflügels.

Die Aufgabe der Erfindung besteht darin, eine Brandschutztür bzw. ein Brandschutzfenster zu schaffen, welche sich in das moderne Erscheinungsbild der architektonischen Gestaltungsräume durch Glaselemente auch dazu eignet, das gesamte Erscheinungsbild nicht zu zerstören und die Möglichkeit bietet, für verschiedenste Anwendungszwecke einsetzbar zu sein.

Die Aufgabe wird gemäß dem Kennzeichen des Patentanspruches 1 gelöst, wobei die Unteransprüche eine weitere Ausgestaltung des erfindungsgemäßen Gedankens wiedergeben. Die Brandschutztür bzw. das Brandschutzfenster werden dabei erfindungsgemäß modular aufgebaut. In der nachfolgenden Beschreibung wird nunmehr nur noch Bezug auf eine Brandschutztür genommen, wobei sich die erfindungsgemäße Ausgestaltung auch auf Brandschutzfenster bezieht. Durch Schaffung eines Grundkörpers einer Brandschutztür können verschiedenste Türtypen wie Pendeltüren, Anschlagtüren usw. ohne zusätzlichen Arbeitsaufwand geschaffen werden. Dabei besteht die Brandschutztür aus einem Türblatt, das durch zwei beabstandete Glasscheiben gebildet wird, wobei die Glasscheiben quasi bis an den Rand des Türblattes reichen. Die Profile sind dabei als Hohlkammerprofile ausgebildet und über Eckverbinder zu einem Rahmen verbunden. Der Rahmen liegt jedoch nicht außen auf und ist nach außen hin nicht sichtbar, da er sich im Innenbereich, das heißt zwischen den beabstandeten Glasscheiben befindet und die Glasscheiben in dem Bereich der Profile durch eine Emalierung diesen Bereich der Profile abdecken. Der Zwischenraum innerhalb des Türblattes, das heißt zwischen dem umlaufenden Rahmen und dem beabstandeten Glasscheiben, wird durch ein transparentes Brandschutzmittel aufgefüllt. Es ist je nach der Verwendungsart auch möglich, auf das transparente flüssige Brandschutzmittel zu verzichten, oder bei einer höheren Brandschutzklasse eine spezielle Brandschutzscheibe in den Zwischenraum einzusetzen. Durch diese Art der Gestaltung wird eine transparente Tür geschaffen, die auch dem Benutzer im Brandfalle noch einen gewissen Durchblick ermöglicht und damit aufzeigt, daß beispielsweise hinter einer solchen Tür ein Brand ausgebrochen ist.

Das Profil für den Rahmen ist sowohl für die Längs- als auch für die Querholme stets das gleiche Profil und weist mindestens einen Hohlraum auf, wobei ein Hohlraum nach außen hin einen Durchbruch oder Vertiefung hat, welche dafür geschaffen ist, weitere Profile anzuschließen. Das Profil des verdeckten Rahmens weist Vorsprünge auf, die die Glasscheibenkanten der verwendeten Glasscheiben abdecken, wobei die Glasscheibenkanten einen Rücksprung haben um ein weiteres Profil, welches als Abschlußprofil fungiert, aufnehmen zu können. Dieses Abschlußprofil wird in dem Durchbruch oder der Nut der ersten Hohlkammer des umlaufenden Profils eingedrückt und deckt somit sicher den Endbereich der Glasscheiben mit seinen Vorsprüngen ab. Das Abschlußprofil hat in seinem Mittenbereich einen T-Nut, die zur Aufnahme von Dichtelementen geeignet ist. Der Verlauf des Abschlußprofiles im äußeren Bereich hat eine ballige Außenkontur bei einer Anschlagtür, wobei andere Ausführungen denkbar sind. In diese Außenkontur können Brandschutzlaminate integriert werden. Die Brandschutzlaminate haben den Zweck, im Brandfall aufgrund der erhöhten Temperatur ein Aufquellen zu bewirken und somit ein Abdichten des Türblattes mit dem umfassenden Türstock zu gewährleisten.

Eine Brandschutztür der erfindungsgemäßen Art kann somit aus einem verdeckten umlaufenden Rahmen und zwei aus Einscheibensicherheitsglas bestehenden Glasscheiben vorgefertigt werden. Wird neben der vorbeschriebenen Ausführung mit einem Abschlußprofil eine andere Verwendungsart beispielsweise die Verwendung einer Anschlagtür gewünscht, so wird ein anderes gestaltetes Profil verwendet, welches ebenfalls in den Durchbruch der Hohlkammer eingesetzt wird und auch die Kanten der Glasscheiben abdeckt, darüber hinaus jedoch noch einen abweisenden Schenkel aufweist, der als Anschlag für das Türblatt in dem Türstock dient.

Es ist jedoch auch denkbar, daß der Anschlagschenkel nicht direkt angeformt ist, sondern daß ein zusätzliches Profil verwendet wird, welches in seinem Außenbereich mindestens vorzugsweise zwei T-Nuten aufweist, wobei in eine der T-Nuten eine Dichtung eingebracht werden kann und in einer zweiten T-Nut ein entsprechend geformtes Anschlagprofil.

Die verwendeten Profile können aus Kunststoff oder Leichtmetall hergestellt werden. Dabei werden innerhalb der Profile entsprechende Beschläge eingebracht, um einen funktionsfähigen Ablauf einer solchen Brandschutztür zu gewährleisten. Derartige Türblätter können sowohl als ein als auch zweiflügelige Drehflügeltüren oder als Pendeltüren ausgeführt werden.

Die Erfindung wird anhand eines schematisch dargestellten Ausführungsbeispiels näher erläutert. Es zeigen:
- Figur 1:: Die Vorderansicht einer geschlossenen Brandschutztür.
- Figur 2:: Ein Vertikalschnitt durch eine Brandschutztür gemäß der Figur 1.
- Figur 3:: Eine Querschnittszeichnung durch einen Teil des Randbereiches mit verschiedensten Profilen.
- Figur 4:: Wie Figur 3 jedoch mit einem anderen Profil.

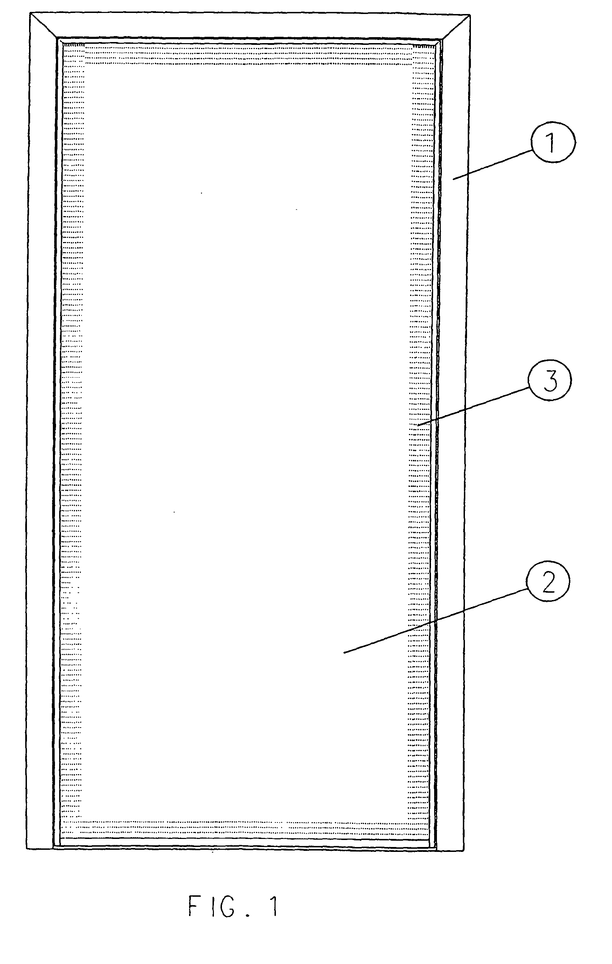

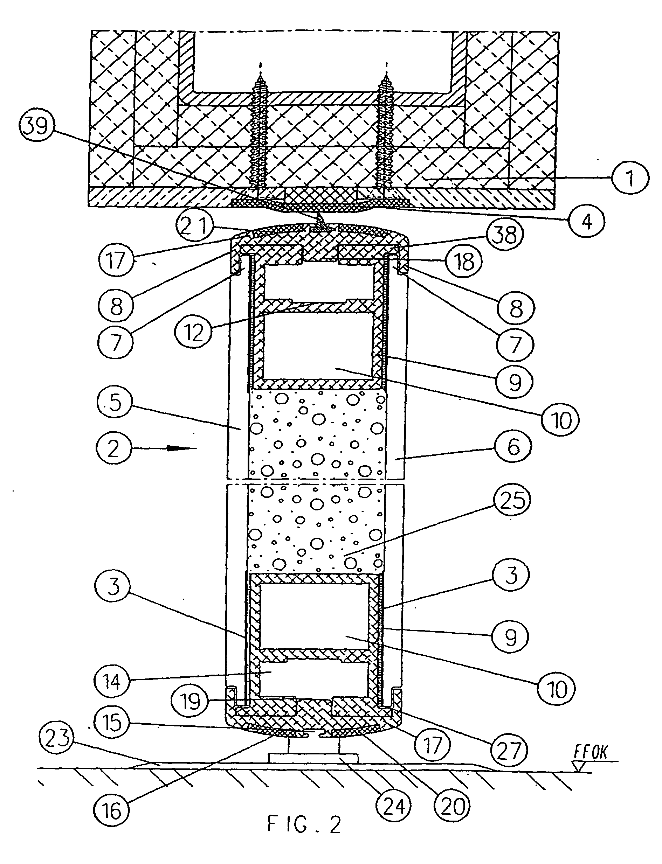

Die Figur 1 zeigt eine Brandschutztür, die nach außen hin sichtbar innerhalb eines Türstockes 1 ein Türblatt 2 aufweist. Eine derartige Tür wird in einem Vertikalschnitt beispielsweise in der Figur 2 wiedergegeben. Zwischen dem oberen Bereich des Türstockes 1, in dem eine Dichtung 4 als Brandschutzlaminat eingefügt ist, ist in der Schnittdarstellung ein Türblatt 2 gezeigt, welches in einem unteren Türlager 24 über einer Eingangsschwelle 23 eines Fußbodens wiedergegeben wird. Der Grundaufbau des Türblattes 2 wird im wesentlichen aus zwei Glasscheiben 5 und 6, die durch einen nicht sichtbaren Rahmen, der durch Profile 9 gebildet wird, erreicht. Das Profil 9 wird über nicht dargestellte Eckverbinder zu einem Rahmen zusammengesetzt. Innerhalb des Rahmens wird zwischen den Glasscheiben 5 und 6 in den verbleibenden Raum eine Brandschutzfüllung 25 beispielsweise in Form eines Brandschutzgeles eingebracht.

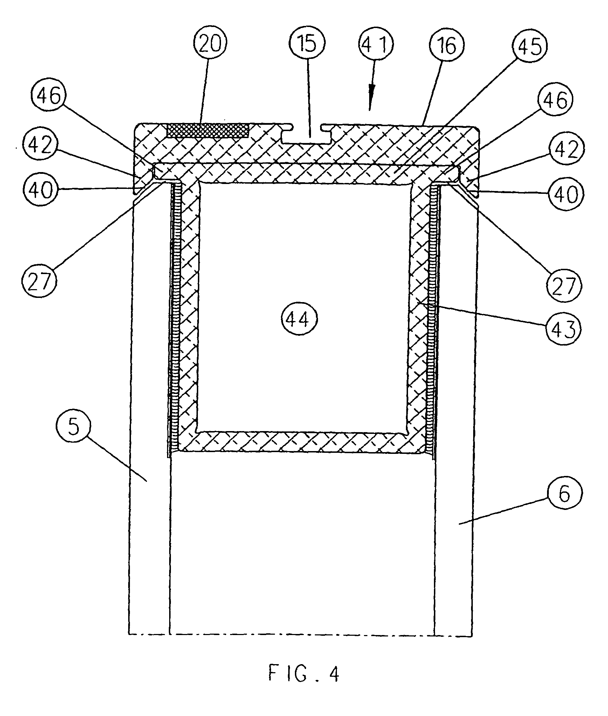

Das Profil 9 besteht im wesentlichen aus zwei Hohlkammern 10 und 14, wobei die Hohlkammer 10 als geschlossene Hohlkammer und die Hohlkammer 14 als offene Hohlkammer mit einem Durchbruch 19, der zur Außenkante des Rahmens weist, ausgeführt ist. Innerhalb des Hohlraumes 14 befindet sich ein Rücksprung 12, der zur weiteren Verbindung bzw. Fixierung von zusätzlich durch den Durchbruch 19 eingebrachter weiterer Profile dient. Das Profil 9 weist an der Außenseite, in der auch der Durchbruch 19 vorhanden ist, zu den Glasscheiben gerichtete Vorsprünge 38 an jeder Seite auf. Die Vorsprünge 38 decken dabei Glasscheibenkanten 27 der Glasscheiben 5 und 6 ab. Die Glasscheiben 5 und 6 haben in diesem Bereich einen Rücksprung 7 gegenüber ihrer Außenfläche. Statt des Rücksprunges 7 können die Glasscheiben 5, 6 auch nur mit einer Fase, wie in der Figur 4 gezeigt wird, versehen sein. In dem Bereich, wo die Profile 9 hinter den Glasscheiben 5 und 6 liegen, sind die Glasscheiben 5 und 6 mit einer Emallierung 3 versehen. Dadurch wird der Rahmen für den Betrachter bzw. den Benutzer einer solchen Brandschutztür nicht sichtbar. In dem Ausführungsbeispiel der Figur 2 ist in dem Durchbruch 19 des Profils 9 sowohl an der Ober- als auch an der Unterseite ein Abschlussprofil 17 eingebracht. Das Abschlussprofil 17 hat einen Vorsprung 18, der dem Abschlussprofil 17 innerhalb des Durchbruches 19 den nötigen Halt gibt. Eine Außenkontur 16 des Abschlussprofiles 17 verläuft in einem Radius und endet beidseitig in vorstehenden Schenkel 8, die in den Rücksprung 7 der Glasscheiben 5 und 6 eingreifen und somit die Glasscheibenkanten 27 komplett abdecken. Die Außenkontur 16 des Abschlussprofiles 17 wird im Mittenbereich durch eine T-Nut 15 unterbrochen. In die T- Nut 15 kann beispielsweise eine Dichtung 39 eingesetzt werden. Des weiteren sind beidseitig zu der T-Nut 15 verlaufend Vertiefungen 21, die durch Brandschutzlaminate in Form von Quellstreifen 20 ausgefüllt sind. Durch diese Brandschutzlaminate wird sichergestellt, dass im Brandfall, durch den erhöhten Hitzeanfall, die Tür sicher den Brandabschnitt abdichtet.

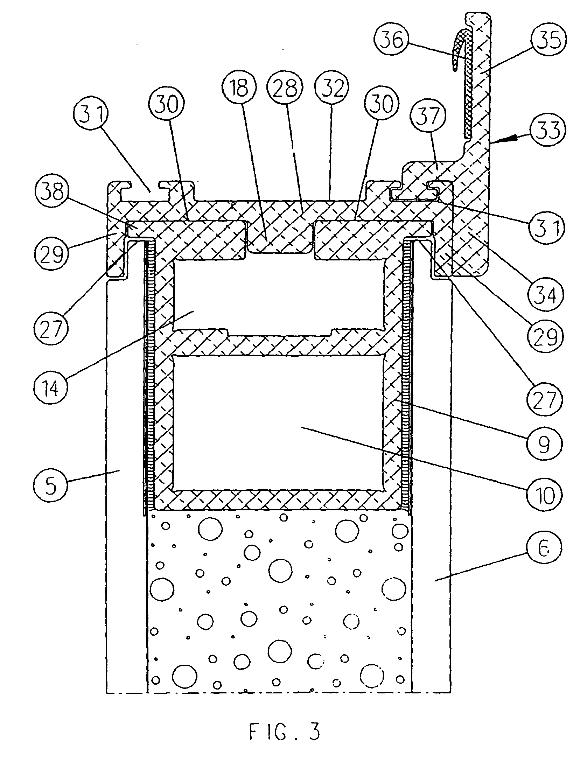

Das Ausführungsbeispiel der Figur 2 zeigt eine Tür, die beispielsweise als Pendeltür eingesetzt werden kann. Aus dem Grundkörper des Türblattes 2, nämlich die Glasscheiben 5 und 6 mit dazwischen liegendem Rahmen aus dem Profil 9, kann jedoch auch, wie es die Figur 3 wiedergibt, eine Anschlagtür gemacht werden. Hierzu wird beispielsweise ein Profil 28 eingesetzt, welches in den Durchbruch 19 mit einem Vorsprung 18 eingesetzt wird. Auch dieses Profil 28 hat an seinem äußeren Bereich Schenkel 29, die die Rücksprünge 7 der Glasscheiben 5 und 6 ausfüllen. Gegenüber dem Vorsprung 18 weist das Profil 28 zwei Rücksprünge 30 auf, die an der Außenkontur des Profils 9 zum Anliegen kommen. In der Außenkontur des Profils 28 sind darüber hinaus zwei T-Nuten 31, vorzugsweise an den Rändern, eingebracht. In diese T-Nut 31 kann beispielsweise ein Dichtelement eingesetzt werden oder aber auch ein Anschlagprofil 33. Diese einzusetzenden Profile können auch aus anderen Materialien bestehen. Das Anschlagprofil 33 ist so gestaltet, dass es parallel zu der Glasscheibe 6 einen verlaufenden Schenkel 34 aufweist, der in einen Schenkel 35 übergeht, der einen geringeren Querschnitt hat als der Schenkel 34. Im Bereich des Überganges des Schenkels 34 in den Schenkel 35 ist ein abgewinkelter Schenkel 37 vorhanden, der in seinem Endbereich einen T-förmigen Ansatz aufweist. Dieser T-förmige Ansatz wird in die T-Nut 31 eingeschoben. An dem Schenkel 35 kann darüber hinaus noch eine Dichtung 36 angebracht sein. Durch diese schnelle Einfügung der Profile 28 und 33 kann somit aus dem Grundelement der Brandschutztür aufgrund des modularen Systems, eine Anschlagtür geschaffen werden. Zwischen den beiden T-Nuten verläuft im Außenbereich des Profils 28 ein Rücksprung 32, der beispielsweise zur Einbringung eines Quellstreifens als Brandschutzlaminat fungieren kann.

In dem Ausführungsbeispiel der Figur 4 wird ein Profil 43 wiedergegeben, welches nur mit einer Hohlkammer 44 ausgestattet ist. Ein äußerer Begrenzungsschenkel 45 hat seitlich angeformte Überstände 46, die die Glasscheibenkanten 27 abdecken. In diesem Ausführungsbeispiel sind die Glasscheiben 5, 6 mit einer Anfasung 40 versehen. Über den Begrenzungsschenkel 45 ist in der Ausführung der Figur 4 ein Abschlussprofil 41 angeschlossen. Das Abschlussprofil 41 ist U-förmig ausgebildet, wobei zwei abweisende Schenkel 42 bis an die Anfasung 40 der Glasscheiben 5, 6 reichen. In der Außenkontur 16 ist mittig eine T-Nut 15 eingelassen, sowie seitlich ein Brandschutzlaminat integriert. Der Zwischenraum zwischen den beabstandeten Glasscheiben 5, 6 kann je nach Brandklasse mit einem Brandschutzmittel z. B. Gel oder Brandschutzglas oder auch mit keinem Brandschutzmittel ausgefüllt sein. In gleicher Weise können die Profile 9, 43 ausgefüllt oder nicht ausgefüllt werden.

Die Profile 9, 17, 28, 41 und 43 können aus Kunststoff, Stahl, Holz oder Leichtmetall hergestellt werden. Bei der Verwendung von Kunststoff handelt es sich um einen glasfaserverstärkten Kunststoff.

### Bezugszeichen

- 1: Türstock
- 2: Türblatt
- 3: Emalierung
- 4: Dichtung
- 5: Glasscheibe
- 6: Glasscheibe
- 7: Rücksprung
- 8: Schenkel
- 9: Profil
- 10: Hohlraum

- 12: Rücksprung

- 14: Hohlraum
- 15: T-Nut
- 16: Außenkontur
- 17: Abschlußprofil
- 18: Vorsprung
- 19: Durchbruch
- 20: Quellstreifen (Brandschutzlaminat)
- 21: Vertiefung
- 23: Eingangsschwelle
- 24: Türlager
- 25: Brandschutzfüllung
- 27: Glasscheibenkanten
- 28: Profil
- 29: Schenkel
- 30: Rücksprung
- 31: T-Nut
- 32: Rücksprung
- 33: Anschlagprofil
- 34: Schenkel
- 35: Schenkel
- 36: Dichtung
- 37: Schenkel
- 38: Vorsprung
- 39: Dichtung
- 40: Anfasung
- 41: Abschlußprofil
- 42: Schenkel
- 43: Profil
- 44: Hohlkammer
- 45: Begrenzungsschenkel
- 46: Überstand

## Patentansprüche

1. Brandschutztür oder -fenster zur Vermeidung des Übergreifens von Rauch und/oder Feuer, die/das in einem Bereich eines Brandabschnittes eingebaut ist, im wesentlichen bestehend aus einer Glasscheibe, welche innerhalb eines sie umfassenden metallischen Rahmens eingebettet ist, wobei die Brandschutztür/das Brandschutzfenster aus mindestens einem beweglichen Teil in Form eines Türblattes (2) bzw. Fensterflügels besteht, das/der aus zwei durch Profile (9, 43) beabstandete Glasscheiben (5, 6) gebildet wird, die quasi bis an den Rand des Türblattes (2) bzw. Fensterflügels reichen und zwischen denen ein transparentes Brandschutzmittel (25) vorhanden ist, **dadurch gekennzeichnet, dass** die Profile (9, 43) als Hohlkammerprofile ausgebildet und zu einem Rahmen verbunden sind, wobei der Rahmen durch eine Teilemallierung (3) der Glasscheiben (5, 6) abgedeckt wird und die Brandschutztür/das Brandschutzfenster modular aufgebaut ist, wobei das Profil (9) mit mindestens zwei Hohlräumen (10, 14) versehen ist, wobei der Hohlraum (14) einen Durchbruch (19) oder Vertiefung aufweist, der zum Anschluss von weiteren Abschlußprofilen (17, 28) geeignet ist oder wobei das Profil (43) mit einer Hohlkammer (44) und einem äußeren Begrenzungsschenkel (45), der zum Anschluss von weiteren Abschlußprofilen (41) geeignet ist, versehen ist.

2. Brandschutztür oder -fenster nach Anspruch 1, **dadurch gekennzeichnet, dass** das Profil (9) Vorsprünge (38) aufweist, die Glasscheibenkanten (27) der Glasscheiben (5) und (6) abdecken.

3. Brandschutztür oder -fenster nach Anspruch 1 oder 2, **dadurch gekennzeichnet, dass** die Glasscheiben (5, 6) im Bereich von Glasscheibenkanten (27) Rücksprünge (7) aufweisen, die von Schenkeln (8, 29) eines Abschlussprofiles (17, 18) ausgefüllt werden.

4. Brandschutztür oder -fenster nach Anspruch 1 oder 2, **dadurch gekennzeichnet, dass** die Glasscheiben (5,6) im Bereich von Glasscheibenkanten (27) Anfasungen (40) aufweisen, die von Schenkeln (42) eines Abschlussprofiles (41) überdeckt werden.

5. Brandschutztür oder -fenster nach einem der Ansprüche 1 bis 4, **dadurch gekennzeichnet, dass** die Abschlussprofile (17, 28, 41) eine ballige oder gerade Außenkontur (16) aufweisen.

6. Brandschutztür oder -fenster nach einem der Ansprüche 1 bis 5, **dadurch gekennzeichnet, dass** die Außenkontur (16) der Abschlussprofile (17, 28, 41) durch mindestens eine T-Nut (15, 31) unterbrochen ist.

7. Brandschutztür oder -fenster nach Anspruch 6, **dadurch gekennzeichnet, dass** in eine T-Nut (15, 31) eine Dichtung (39) eingesetzt wird.

8. Brandschutztür oder -fenster nach Anspruch 6 oder 7, **dadurch gekennzeichnet, dass** in eine T-Nut (31) ein Anschlagprofil (33) eingesetzt wird.

9. Brandschutztür oder -fenster nach einem der Ansprüche 5 bis 8, **dadurch gekennzeichnet, dass** in die Außenkontur (16) Brandschutzlaminate (20) integriert sind.

10. Brandschutztür oder -fenster nach einem der Ansprüche 1 bis 9, **dadurch gekennzeichnet, dass** das Profil (43), welches eine Hohlkammer (44) aufweist, mit einem äußeren Begrenzungsschenkel (45) ausgestattet ist, der Überstände (46) beinhaltet, die die Glasscheibenkanten (27) ganz oder teilweise abdecken.

11. Brandschutztür oder -fenster nach einem oder mehreren der vorhergehenden Ansprüche, **dadurch gekennzeichnet, dass** die Profile (9, 43) bzw. Abschlußprofile (17, 28, 41) aus Kunststoff, Stahl, Holz oder Leichtmetall bestehen.

12. Brandschutztür oder -fenster nach Anspruch 11, **dadurch gekennzeichnet, dass** der Kunststoff ein glasfaserverstärkter Kunststoff ist.

13. Brandschutztür oder -fenster nach einem oder mehreren der vorhergehenden Ansprüche, **dadurch gekennzeichnet, dass** innerhalb der Profile (9, 43) Beschläge eingebaut sind.

14. Brandschutztür oder -fenster nach einem oder mehreren der vorhergehenden Ansprüche, **dadurch gekennzeichnet, dass** mindestens ein Türblatt (2) in einer ein- oder zweiflügeligen Drehflügeltür angeordnet ist.

15. Brandschutztür oder -fenster nach einem oder mehreren der vorhergehenden Ansprüche, **dadurch gekennzeichnet, dass** mindestens ein Türblatt (2) in einer ein- oder zweiflügeligen Pendeltür angeordnet ist.

16. Brandschutztür oder -fenster nach einem oder mehreren der vorhergehenden Ansprüche, **dadurch gekennzeichnet, dass** die Glasscheiben (5, 6) aus einem Sicherheitsglas bestehen.

17. Brandschutztür oder -fenster nach einem oder mehreren der vorhergehenden Ansprüche, **dadurch gekennzeichnet, dass** der Rahmen mit einem Brandschutzmittel (25) ausgefüllt ist.

18. Brandschutztür oder -fenster nach einem oder mehreren der vorhergehenden Ansprüche, **dadurch gekennzeichnet, dass** das Brandschutzmittel (25) ein Brandschutzgel ist.

## Claims

1. A fire door or fire window for avoiding the spreading of smoke and / or fire which is incorporated into the area of a fire lobby, essentially comprising a pane of glass which is embedded in a metal frame surrounding it wherein the fire door / fire window comprises at least one movable part in the form of a door leaf (2) or window casement which is formed by two panes of glass (5, 6) spaced apart by profiles (9, 43), which panes of glass (5, 6) reach almost to the edge of the door leaf (2) or window casement and between which there is a transparent fire protection medium (25), **characterised in that** the profiles (9, 43) are formed as hollow chamber profiles and are connected to form a frame wherein the frame is covered by partial enamelling (3) of the panes of glass (5, 6) and the fire door / fire window is modularly constructed wherein the profile (9) is provided with at least two hollow spaces (10, 14) wherein the hollow space (14) has an opening (19) or depression which is suitable for the connection of further end profiles (17, 28) or wherein the profile (43) is provided with a hollow chamber (44) and an outer boundary limb (45) which is suitable for the connection of further end profiles (41).

2. A fire door or fire window according to claim 1, **characterised in that** the profile (9) has projections (38) which cover edges (27) of the panes of glass (5) and (6).

3. A fire door or fire window according to claim 1 or 2, **characterised in that** the panes of glass (5, 6) have recesses (7) in the region of edges (27) of the panes of glass, which recesses (7) are filled by limbs (8, 29) of an end profile (17, 18).

4. A fire door or fire window according to claim 1 or 2, **characterised in that** the panes of glass (5, 6) have chamfered areas (40) in the region of edges (27) of the panes of glass, which chamfered areas (40) are overlapped by limbs (42) of an end profile (41).

5. A fire door or fire window according to one of the claims 1 to 4, **characterised in that** the end profiles (17, 28, 41) have a spherical or straight outer contour (16).

6. A fire door or fire window according to one of the claims 1 to 5, **characterised in that** the outer contour (16) of the end profiles (17, 28, 41) is interrupted by at least one T-groove (15, 31).

7. A fire door or fire window according to claim 6, **characterised in that** a seal (39) is inserted into a T-groove (15, 31).

8. A fire door or fire window according to claim 6 or 7, **characterised in that** a T-profile (33) is inserted into a T-groove (31).

9. A fire door or fire window according to one of the claims 5 to 8, **characterised in that** fire protection laminates (20) are integrated into the outer contour (16).

10. A fire door or fire window according to one of the claims 1 to 9, **characterised in that** the profile (43) which comprises a hollow chamber (44) is equipped with an outer boundary limb (45) which contains projections (46) which fully or partially cover the edges (27) of the panes of glass.

11. A fire door or fire window according to one or more of the preceding claims, **characterised in that** the profiles (9, 43) or end profiles (17, 28, 41) are made of plastic, steel, wood or light alloy.

12. A fire door or fire window according to claim 11, **characterised in that** the plastic is a glass fibre reinforced plastic.

13. A fire door or fire window according to one or more of the preceding claims, **characterised in that** fittings are incorporated into the profiles (9, 43).

14. A fire door or fire window according to one or more of the preceding claims, **characterised in that** at least one door leaf (2) is arranged in a single leaved or double leaved rotating door.

15. A fire door or fire window according to one or more of the preceding claims, **characterised in that** at least one door leaf (2) is arranged in a single leaved or double leaved swinging door.

16. A fire door or fire window according to one or more of the preceding claims, **characterised in that** the panes of glass (5, 6) are made of a safety glass.

17. A fire door or fire window according to one or more of the preceding claims, **characterised in that** the frame is filled with a fire protection medium (25).

18. A fire door or fire window according to one or more of the preceding claims, **characterised in that** the fire protection medium (25) is a fire gel.

## Revendications

1. Porte ou fenêtre coupe-feu, pour éviter l'envahissement par la fumée et/ou le feu, montée dans une zone d'un tronçon de feu, composé essentiellement d'un panneau en verre, incorporé dans un cadre métallique l'entourant, la porte coupe-feu/la fenêtre coupe-feu étant formée d'au moins une partie mobile ayant la forme d'un vantail de porte (2) ou d'un battant de fenêtre, formé de deux panneaux en verre (5, 6), espacés par des profilés (9, 43) et arrivant quasiment jusqu'au bord du vantail de porte (2) ou battant de fenêtre et, entre eux, étant prévu un milieu coupe-feu (25) transparent, **caractérisée en ce que** les profilés (9, 43) sont réalisés sous forme de profilés à chambre creuse et sont reliés en un cadre, le cadre étant couvert par un émaillage partiel (3) des panneaux en verre (5, 6) et la porte coupe-feu/la fenêtre coupe-feu étant de construction modulaire, sachant que le profilé (9) est muni d'au moins deux espaces creux (10, 14), l'espace creux (14) présentant un passage (19) ou une cavité convenant pour un raccordement d'autres profilés de fermeture (17, 28), le profilé (43) étant muni d'une chambre creuse (44) et d'une branche de limitation (45) extérieure, convenant pour le raccordement d'autres profilés de fermeture (41).

2. Porte ou fenêtre coupe-feu selon la revendication 1, **caractérisée en ce que** le profilé (9) présente des saillies (38) couvrant les arêtes (27) des panneaux en verre (5) et (6).

3. Porte ou fenêtre coupe-feu selon la revendication 1 ou 2, **caractérisée en ce que** les panneaux en verre (5, 6) présentent, dans la zone des arêtes (27) des panneaux en verre, des retraits (7) remplis par des branches (8, 29) d'un profilé de fermeture (17, 18).

4. Porte ou fenêtre coupe-feu selon la revendication 1 ou 2, **caractérisée en ce que** les panneaux en verre (5, 6) présentent, dans la zone des arêtes (27) des panneaux en verre, des biseautages (40) couverts par des branches (42) d'un profilé de fermeture (41).

5. Porte ou fenêtre coupe-feu selon l'une des revendica-tions 1 à 4, **caractérisée en ce que** les profilés de fermeture (17, 28, 41) présentent un contour extérieur (16) bombé ou rectiligne.

6. Porte ou fenêtre coupe-feu selon l'une des revendications 1 à 5, **caractérisée en ce que** le contour extérieur (16) des profilés de fermeture (17, 28, 41) est interrompu par au moins une rainure en T (15, 31).

7. Porte ou fenêtre coupe-feu selon la revendication 6, **caractérisée en ce qu'**un joint d'étanchéité (39) est inséré dans une rainure en T (15, 31).

8. Porte ou fenêtre coupe-feu selon la revendication 6 ou 7, **caractérisée en ce qu'**un profilé de butée (33) est inséré dans une rainure en T (31).

9. Porte ou fenêtre coupe-feu selon l'une des revendications 5 à 8, **caractérisée en ce que** des laminés coupe-feu (20) sont intégrés dans le contour extérieur (16) .

10. Porte ou fenêtre coupe-feu selon l'une des revendications 1 à 9, **caractérisée en ce que** le profilé (43) présentant une chambre creuse (44) est muni d'une branche de délimitation extérieure (45), comprenant des dépassements (46) couvrant, en totalité ou en partie, les arêtes (27) des panneaux en verre.

11. Porte ou fenêtre coupe-feu selon l'une ou plusieurs des revendications précédentes, **caractérisée en ce que** les profilés (9, 43) et/ou les profilés de fermeture (17, 28, 41) sont formés en matière synthétique, en acier, en bois ou en métal léger.

12. Porte ou fenêtre coupe-feu selon la revendication 11, **caractérisée en ce que** la matière synthétique est une matière synthétique renforcée par des fibres de verre.

13. Porte ou fenêtre coupe-feu selon l'une ou plusieurs des revendications précédentes, **caractérisée en ce que** des ferrures sont intégrées à l'intérieur des profilés (9, 43).

14. Porte ou fenêtre coupe-feu selon l'une ou plusieurs des revendications précédentes, **caractérisée en ce qu'**un vantail de porte (2) est disposé en un vantail de porte rotatif, à un ou deux vantaux.

15. Porte ou fenêtre coupe-feu selon l'une ou plusieurs des revendications précédentes, **caractérisée en ce qu'**au moins un vantail de porte (2) est disposé en une porte oscillante, à un ou deux vantaux.

16. Porte ou fenêtre coupe-feu selon l'une ou plusieurs des revendications précédentes, **caractérisée en ce que** les panneaux en verre (5, 6) sont formés d'un verre de sécurité.

17. Porte ou fenêtre coupe-feu selon l'une ou plusieurs des revendications précédentes, **caractérisée en ce que** le cadre est rempli d'un produit coupe-feu (25).

18. Porte ou fenêtre coupe-feu selon l'une ou plusieurs des revendications précédentes, **caractérisée en ce que** le produit coupe-feu (25) est un gel coupe-feu
